# EUROPEAN PATENT APPLICATION

(11) **EP 4 332 362 A1**
(43) Date of publication of application: **06.03.2024**
(21) Application number: 23193738.4
(22) Date of filing: 28.08.2023
(51) Int. Cl.: F02C 7/236, F02C 9/30, B64D 37/00

(54) **VARIABLE SPEED HYDRAULIC MOTOR DRIVEN FUEL SYSTEMS**

(30) Priority: 29.08.2022 US 202217898412
(71) Applicant: Hamilton Sundstrand Corporation, Charlotte, NC 28217-4578 (US)
(72) Inventor: GOY, Edward W., Crystal Lake, 60014 (US)
(74) Representative: Dehns

(57) **Abstract**

In accordance with at least one aspect of this disclosure, a system (100), includes a fuel line (106) defining a fuel inlet (110) and a fuel outlet (112), configured to provide fuel from a fuel tank (102) to an engine (104). A boost pump (108), including a boost impeller (114), is disposed in the fuel line (106) configured to drive fuel from the fuel inlet (110) to the fuel outlet (112) and operatively connected to the boost pump (108) via a drive shaft (119). The system includes a fluid line (118) defining a fluid inlet (120) and a fluid outlet (122), configured to provide fluid from a fluid source (124) to a fluid destination(126). A fluid turbine (128) is disposed in the fluid line (118) configured to alter a pressure of the fuel line (106) between the fuel inlet (110) and the fuel outlet (112).

## Description

### TECHNICAL FIELD

The present disclosure relates to fuel systems, and more particularly to variable speed hydraulic motor driven fuel systems.

### BACKGROUND

Hydraulic motor driven pumping systems driven by hydraulic fluid or fuel can be included in various locations in aircraft fuel systems. Such systems are typically fed a constant flow and pressure which results in a consistent speed at given flight conditions. Constant flow and pressure hydraulic pumping systems are often sized for the worst-case condition and then will provide excessive flow/pressure at all other conditions. This can result in an inefficient system, in certain instances.

However, there remains a need in the art for improvements to hydraulic motor driven pumping systems, e.g., in the aerospace industry. This disclosure provides a solution for this need.

### SUMMARY

In accordance with at least one aspect of this disclosure, a system, includes a fuel line defining a fuel inlet and a fuel outlet, configured to provide fuel from a fuel tank to an engine. A boost pump, including a boost impeller, is disposed in the fuel line configured to drive fuel from the fuel inlet to the fuel outlet. The system includes a fluid line defining a fluid inlet and a fluid outlet, configured to provide fluid from a fluid source to a fluid destination. A fluid turbine is disposed in the fluid line configured to alter a pressure of the fuel line at the fuel outlet. The fluid turbine can be operatively connected to the boost pump via a drive shaft. A regulating valve is disposed in the fluid line upstream of the fluid turbine configured to control a pressure of the fluid line to control the speed of the fluid turbine. A controllable valve is fluidly connected to the fuel line and to the fluid line configured to control a flow of fluid to the regulating valve based at least in part on a pressure in the fuel line and/or a command from an airframe or engine controller.

In certain embodiments, the regulating valve can be or include a bypass regulating valve configured to control a pressure in the fluid line by controlling an amount of bypass discharge. In a first position, the bypass regulating valve can be configured to pass flow from the fluid source and the controllable valve to the fluid line and to bypass a portion of flow to a bypass outlet based at least in part on flow from the controllable valve. In a second position, the bypass regulating valve can be configured to prevent flow from passing from the fluid source to the fluid line. As the bypass regulating valve moves from the first position to the second position (e.g., opens) pressure in the fluid line will decrease, flow to the fluid turbine will decrease and the speed of the fluid turbine will decrease in turn, altering the speed of the fuel pump which decreases the pressure at the discharge of the boost pump.

In embodiments, a pressure sensor can be disposed in the fuel line configured to sense and output a signal indicative of a pressure in the fuel line, and a controller can be operatively connected to receive the signal indicative of a pressure in the fuel line and control the controllable valve based at least in part on the signal indicative of the pressure in the fuel line. In certain embodiments, the system can include a controller configured to control the controllable valve to control flow to the fluid turbine to alter the pressure in the fuel line based at least in part on a required pressure setting for the fuel line for a given engine condition.

In certain embodiments, the regulating valve can be or include a pressure compensation valve configured to control a pressure in the fluid line. In such embodiments, in a first position, the pressure compensation valve can be configured to pass flow from the fluid source and the controllable valve to the fluid line and to bypass a portion of flow to a bypass outlet based at least in part on discharge pressure feedback from the boost pump. In a second position, the pressure compensation valve can be configured to prevent flow from passing from the fluid source to the fluid line. As the bypass regulating valve moves from the second positon to the first positon (e.g., closes) pressure in the fluid line will increase, flow to the fluid turbine will increase and the speed of the fluid turbine will increase in turn, altering the speed of a fuel pump which increases the pressure in the fuel line to increase the boost pressure.

In certain such embodiments, a pressure sensor disposed in the fuel line configured to sense and output a signal indicative of a pressure in the fuel line, and a controller can be operatively connected to receive the signal indicative of a pressure in the fuel line and control the pressure compensation valve based at least in part on the signal indicative of the pressure in the fuel line to alter the pressure in the fuel line based at least in part on a required pressure setting for the fuel line for a given engine condition.

In certain embodiments, the fuel line can be a first fuel line, the fuel inlet can be a first fuel inlet and the fuel outlet can be a first fuel outlet. In such embodiments, the boost pump can further include a second boost impeller disposed in a second fuel line between a second fuel inlet and a second fuel outlet. In such embodiments, the fluid turbine can be disposed in the fluid line between the first fuel line and the second fuel line, and is configured to alter a pressure of the first fuel line and the second fuel line.

In certain embodiments, the controllable valve can include an electrohydraulic servo valve. In certain embodiments, the fluid can include hydraulic fluid and the fluid turbine can include a hydraulic pump. In certain embodiments, the fluid can include oil, such as gearbox oil. In certain embodiments, the fluid can include fuel and the fluid turbine can include a fueldraulic pump. In embodiments, the system can include the fuel tank and the engine and the boost pump can be disposed in the fuel tank, and can be upstream from any engine boost pump(s).

In accordance with at least one aspect of this disclosure, a method, includes altering, with a fluid motor, a discharge pressure of a boost pump in a fuel line upstream of an engine while the boost pump is operating. Altering can include providing fluid to the fluid motor via a regulating valve disposed in a fluid line to control a speed of a fluid turbine of the fluid motor.

In certain embodiments, the regulating valve can include a bypass regulating valve, and in such embodiments, altering can include providing flow to the bypass regulating valve through a controllable valve based at least in part on pressure feedback from the fuel line and/or an engine command.

In certain embodiments, the regulating valve can include a pressure compensating valve, and in such embodiments, altering can include providing flow to the pressure compensation valve through a controllable valve based at least in part on pressure feedback from the fuel line and/or an engine command.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure, showing a fuel system; and
Fig. 2 is a schematic diagram of another embodiment of a system in accordance with this disclosure, showing another fuel system.

### DETAILED DESCRIPTION

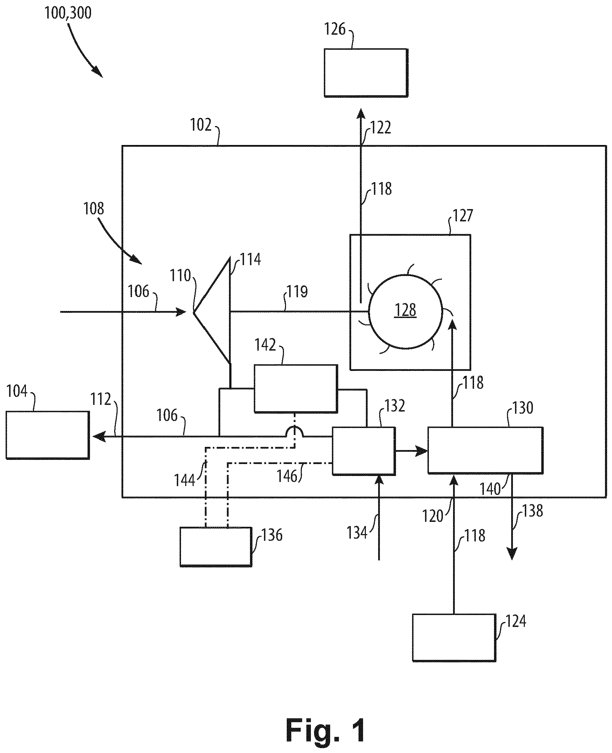

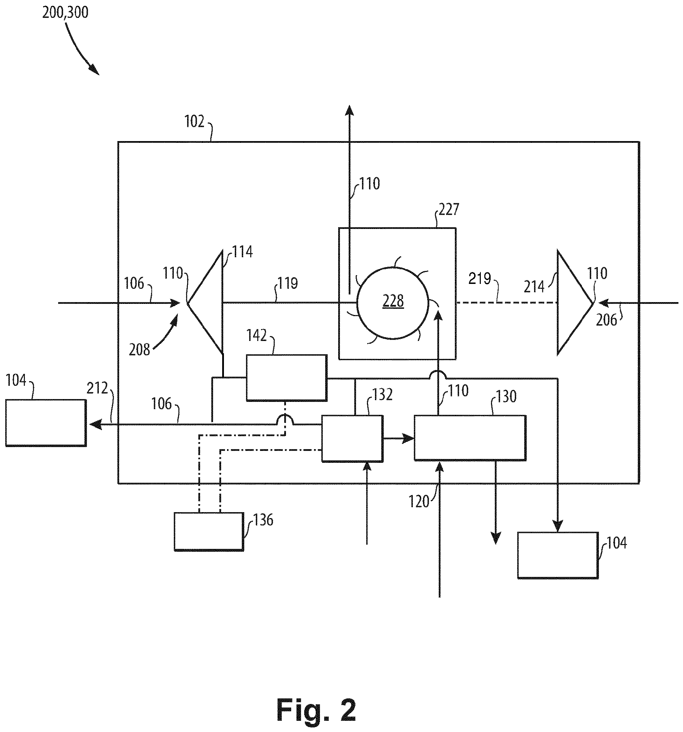

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. Certain embodiments described herein can be used to actively vary a fuel discharge pressure in a fuel system.

In accordance with at least one aspect of this disclosure, as shown in Fig. 1, a system 100 can include a fuel tank 102 (e.g., of an aircraft) fluidly connected to provide fuel to an engine 104 via a fuel line 106. A boost pump 108 can be disposed in the fuel tank 102 to boost the pressure in the fuel line 106 to provide higher pressure fuel to the engine 104. The boost pump 108 can be upstream from any engine boost pump(s).

The fuel line 106 defines a fuel inlet 110 and a fuel outlet 112 (e.g., into the boost pump 108 and out of the fuel tank 102), to provide the fuel from the fuel tank 102 to the engine 104. The boost pump 108 can include a boost impeller 114 disposed in the fuel line 106 configured to drive fuel from the fuel inlet 110 to the fuel outlet 112, boosting the discharge pressure in the fuel line 106 at an outlet 116 of the boost pump 108. The system 100 includes a fluid line 118 defining a fluid inlet 120 and a fluid outlet 122, configured to provide fluid from a fluid source 124 to a fluid destination 126 (e.g., one or more downstream fuel system components or a gearbox). In certain embodiments, the fluid can include hydraulic fluid, oil (e.g., gearbox oil), or the fluid can include fuel if the system includes a fueldraulic system. In certain embodiments, the boost pump 108 can be included in an airframe and the fluid destination 126 an engine fuel system. In certain embodiments, the boost pump 108 can be included in the engine and the fluid destination 126 can include a fuel filter and/or one or more exchangers.

A fluid motor 127 having a fluid turbine 128 can be disposed in the fluid line 118 and operatively connected to the boost pump via a drive shaft 119, the fluid turbine 128 configured to alter the rotational speed of the impeller 114 to create a pressure at the fuel outlet 112, to selectively raise the discharge pressure of the fuel in the fuel line 112 provided to the engine from the boost pump 108. A regulating valve 130 can be disposed in the fluid line 118 upstream of the fluid turbine 128 configured to control the amount of flow and pressure of the fluid line 118 to control the speed of the fluid turbine 128. A controllable valve 132, such as an electronically controllable or otherwise command able valve (e.g., an EHSV), can be fluidly connected to the fuel line 106 and/or to the fluid line 118 (e.g., via the regulating valve). The controllable valve 132 can be supplied with a supply pressure 134 and can control a flow of fluid to the regulating valve 130 based at least in part on a pressure in the fuel line and/or a command from an airframe or engine controller 136.

As shown, the boost impeller 114 can take fuel from the fuel tank 102 to boost the pressure to deliver to the engine 104 and the boost impeller 114 can be driven by the fluid turbine 128 via the mechanical drive shaft 119 between the turbine 128 and the boost impeller 114. The fluid turbine 128 can be driven by a fluid flow (e.g., in fluid line 118), which is controlled by valve 130. In embodiments, there is no fluid connection between the fluid turbine 128 and the boost impeller(s) 114. In certain embodiments, e.g., where the fluid turbine 128 is driven by a fluid other than fuel, one or more shaft seals may be included on the drive shaft 119, and there is no fuel connection between the fuel line 106 and the controllable valve 132. In embodiments, e.g., where the fluid turbine 128 is driven by fuel, fuel is discharged from the boost impeller 114 out to be sensed by a pressure transducer 142 (e.g. as described below) and feeds the controllable valve 132 as a supply pressure and then flows out to the engine 104.

In embodiments, the engine command can include a required pressure setting for a given engine condition. In certain embodiments, the regulating valve 130 can be or include a bypass regulating valve configured to control a pressure in the fluid line 118 by controlling an amount of bypass discharge 138. In certain embodiments, the regulating valve 130 can be or include a pressure compensation valve configured to control a pressure in the fluid line 118 by controlling an amount of bypass discharge 138 based on the required pressure setting for the given engine condition. In a first position (e.g., an open position), the regulating valve 130 can be configured to pass flow from the fluid source 124 and the controllable valve 132 to the fluid line 118 and to bypass a portion of flow to a bypass outlet 140 based at least in part on flow from the controllable valve 132. In a second position (e.g., a bypass position), the regulating valve 130 can be configured to prevent flow from passing from the fluid source 124 to the fluid line 118 and instead pass all fluid to the bypass outlet 140 as bypass discharge 138, slowing the speed of the fluid turbine 128.

As the regulating valve moves from the second positon to the first positon (e.g., opens to the fluid line 118 and decreasing the amount of bypass) pressure in the fluid line 118 will increase and increase flow to the fluid turbine 128. This will increase the speed of the fluid turbine 128, causing the boosted fuel discharge pressure at the fuel outlet 112 to increase.

A pressure sensor 142 (e.g., a pressure transducer) can be disposed in the fuel line 106 downstream of the boost impeller 114, configured to sense and output a signal 144 indicative of a pressure in the fuel line 106. The controller 136 can be operatively connected to receive the signal indicative of a pressure in the fuel line 106 and can be configured to control the controllable valve 132 based at least in part on the signal indicative of the pressure in the fuel line 106 via control signal 146. In certain embodiments, the controller 136 can also be configured to control the controllable valve 132 to control flow to the fluid turbine 128 to alter the pressure in the fuel line 106 based at least in part on a required pressure setting for the fuel line for a given engine condition, either together with or independent of the pressure sensor reading 144. In embodiments, the controller 136 can include an existing engine or airframe controller additionally programmed to control the controllable valve (e.g., an existing FADEC), or the controller 136 can be an additional controller dedicated to controlling the controllable valve 132.

With reference now to Fig. 2, in certain embodiments, a system 200 can be similar to that of system 100, for example system 200 can have similar components and features with respect to systems 100. For brevity, the description of common elements that have been described above for system 100 are not repeated with respect to system 200 as shown in Fig. 2.

In system 200, the fuel line 106 can be a first fuel line 106, the fuel inlet 110 can be a first fuel inlet 110, the fuel outlet 112 can be a first fuel outlet 112, and the boost pump 208 can further include a second boost impeller 214 disposed in a second fuel line 206 between a second fuel inlet 210 and a second fuel outlet 212. Here, the fluid turbine 228 can be disposed in the fluid line 118 between the first fuel line 106 and the second fuel line 206. The fluid turbine 228 can be mechanically connected to each of the boost impellers 114, 214 via drive shaft(s) 119, 219 and can be is configured to alter a pressure of both the first fuel line 106 and the second fuel line 206 at the same time. The controllable valve 132, the regulating valve 130, and the pressure sensor 142 can be used in the same or similar manner as described above with respect to system 100 and may be additionally connected to the second fuel line 206 in a similar manner as with respect to the first fuel line 106. However, in certain embodiments, if a pressure compensation valve is used for the regulating valve 130, the pressure compensation valve is also fluidly connected to the second fuel line 206, while a bypass regulating valve would not be so connected to the second fuel line 206.

In accordance with at least one aspect of this disclosure, a method 300 can include altering, with a fluid motor (e.g., fluid motor 127, 227), a discharge pressure of a boost pump (e.g., boost pump 108, 208) in a fuel line (e.g., fuel line 106) upstream of an engine while the boost pump is operating. Altering can include providing fluid to the fluid motor via a regulating valve (e.g., regulating valve 130) disposed in a fluid line (e.g., fluid line 118) to control a speed of a fluid turbine (e.g., turbine 128, 228) of the fluid motor.

In certain embodiments, the regulating valve can include a bypass regulating valve, and in such embodiments, altering can include providing flow to the bypass regulating valve through a controllable valve (e.g., controllable valve 132) based at least in part on pressure feedback (e.g., feedback from sensor 142) from the fuel line and/or an engine command (e.g., command 146 from controller 136).

In certain embodiments, the regulating valve can include a pressure compensating valve, and in such embodiments, altering can include providing flow to the pressure compensation valve through a controllable valve (e.g., controllable valve 132) based at least in part on pressure feedback (e.g., feedback from sensor 142) from the fuel line and/or an engine command (e.g., command 146 from controller 136).

Embodiments include a variable fluid driven boost pump to selectively vary fuel discharge pressure from a fuel tank boost pump to improve efficiency and minimize losses during variable engine conditions. For example, when the engine is idle, the system 100, 200 allows for selectively decreasing the boost pressure while the pump is operating by varying flow in the fluid line. During conditions when higher boost pressure is needed or desired (e.g., to reduce overtaxing engine boost pumps) the system 100, 200 can increase the boost pressure at the outlet of the fuel tank by varying flow in the fluid line. The fluid line and fluid turbine operate selectively, either as a function of an engine command, a required pressure setting, or the pressure in the fuel line, and therefore does not change the pressure in the fuel line for the entire duty cycle. Additional flow to the fluid line is provided only when needed and does not require the main fuel tank boost pumps to be sized for the highest pressure (e.g., take-off or max climb). The fluid turbine uses fuel draw from the engine to control pressure in the fuel line at the outlet of the fuel tank, rather than an electronic motor driven pump.

Boost pumps or electric motor pumps may be sized for the worst case condition, and typically operate at a single speed. Embodiments can include a bypass regulating valve with control from an electrohydraulic servo valve that is controlled by an engine controller or other computing means on-aircraft to actively adjust fuel pressure upstream of the engine, while the pumps are operating to allow for a variable speed boost pump. Embodiments can include a pressure compensation valve that receives discharge pressure feedback from the boost pump and controls the flow to the fluid motor based upon a required pressure setting. The speed of the boost pumps described herein can be adjusted to meet the pressure needs of the system and therefore can have a higher overall efficiency than conventional boost pumps. Further, the systems as disclosed herein do not create more pressure than needed and thus do not draw more horsepower than needed, unlike single speed boost pumps which may generate more pressure and heat than is necessary for the system at a given operating condition.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of "

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A system, comprising:
a fuel line (106) defining a fuel inlet (110) and a fuel outlet (112), configured to provide fuel from a fuel tank (102) to an engine (104);
a boost pump (108), including a boost impeller (114), disposed in the fuel line (106) configured to drive fuel from the fuel inlet (110) to the fuel outlet (112);
a fluid line (118) defining a fluid inlet (120) and a fluid outlet (122), configured to provide fluid from a fluid source (124) to a fluid destination (126);
a fluid turbine (128) disposed in the fluid line (118) configured to alter a pressure of the fuel line (106) at the fuel outlet (112) and operatively connected to the boost pump (108) via a drive shaft (119);
a regulating valve (130) disposed in the fluid line (118) upstream of the fluid turbine (128) configured to control a pressure of the fluid line (118) to control the speed of the fluid turbine (128); and
a controllable valve (132) fluidly connected to the fuel line (106) and to the fluid line (118) configured to control a flow of fluid to the regulating valve (130) based at least in part on a pressure in the fuel line (106) and/or a command from an airframe or engine controller.

2. The system of claim 1, wherein the regulating valve (130) includes a bypass regulating valve configured to control a pressure in the fluid line by controlling an amount of bypass discharge.

3. The system of claim 2, wherein in a first position, the bypass regulating valve is configured to pass flow from the fluid source (124) and the controllable valve (132) to the fluid line (118) and to bypass a portion of flow to a bypass outlet based at least in part on flow from the controllable valve (132), and wherein in a second position, the bypass regulating valve is configured to prevent flow from passing from the fluid source (124) to the fluid line (118).

4. The system of claim 3, further comprising:
a pressure sensor (142) disposed in the fuel line (106) configured to sense and output a signal indicative of a pressure in the fuel line; and
a controller (136) configured to receive the signal indicative of a pressure in the fuel line (106) and control the controllable valve (132) based at least in part on the signal indicative of the pressure in the fuel line (106).

5. The system of claim 3, further comprising:
a controller (136) configured to control the controllable valve (132) to control flow to the fluid turbine (128) to alter the pressure in the fuel line (106) based at least in part on a required pressure setting for the fuel line (106) for a given engine condition.

6. The system of claim 1, wherein the regulating valve (130) includes a pressure compensation valve configured to control a pressure in the fluid line (118).

7. The system of claim 6, wherein in a first position, the pressure compensation valve is configured to pass flow from the fluid source (124) and the controllable valve (132) to the fluid line (118) and to bypass a portion of flow to a bypass outlet based at least in part on discharge pressure feedback from the boost pump (108), and wherein in a second position, the pressure compensation valve is configured to prevent flow from passing from the fluid source (124) to the fluid line (118).

8. The system of claim 7, further comprising:
a pressure sensor (142) disposed in the fuel line (106) configured to sense and output a signal indicative of a pressure in the fuel line (106); and
a controller (136) configured to receive the signal indicative of a pressure in the fuel line and control the pressure compensation valve based at least in part on the signal indicative of the pressure in the fuel line to alter the pressure in the fuel line based at least in part on a required pressure setting for the fuel line for a given engine condition.

9. The system of any preceding claim, wherein the fuel line (106) is a first fuel line, the fuel inlet is a first fuel inlet and the fuel outlet is a first fuel outlet, wherein the boost pump further includes a second boost impeller (214) disposed in a second fuel line (206) between a second fuel inlet (210) and a second fuel outlet (212), and preferably wherein the fluid turbine (228) is disposed in the fluid line (118) between the first fuel line (106) and the second fuel line (206), and is configured to alter a pressure of the first fuel line (106) and the second fuel line (206).

10. The system of any preceding claim, wherein the controllable valve (132) includes an electrohydraulic servo valve.

11. The system of any preceding claim, wherein the fluid includes hydraulic fluid or oil; or wherein the fluid includes fuel.

12. The system of any preceding claim, further comprising the fuel tank and the engine, wherein the boost pump is disposed in the fuel tank.

13. A method, comprising:
altering, with a fluid motor, a discharge pressure of a boost pump in a fuel line upstream of an engine while the boost pump is operating.

14. The method of claim 13, wherein altering includes providing fluid to the fluid motor via a regulating valve disposed in a fluid line to control a speed of a fluid turbine of the fluid motor.

15. The method of claim 14, wherein the regulating valve includes a bypass regulating valve, and wherein altering includes providing flow to the bypass regulating valve through a controllable valve based at least in part on pressure feedback from the fuel line and/or an engine command; or
wherein the regulating valve includes a pressure compensating valve, and wherein altering includes providing flow to the pressure compensation valve through a controllable valve based at least in part on pressure feedback from the fuel line and/or an engine command.
